(19) Europäisches Patentamt

European Patent Office

Office européen des brevets

(11) Veröffentlichungsnummer: **0 352 844 B1**

(12) **EUROPÄISCHE PATENTSCHRIFT**

(45) Veröffentlichungstag der Patentschrift: **04.05.94**

(51) Int. Cl.5: **G02F 1/09**, G02F 1/095

(21) Anmeldenummer: **89201873.0**

(22) Anmeldetag: **17.07.89**

(54) **Optischer Isolator, Zirkulator, Schalter oder dergleichen mit einem Faraday-Rotator.**

(30) Priorität: **23.07.88 DE 3825079**

(43) Veröffentlichungstag der Anmeldung:
**31.01.90 Patentblatt 90/05**

(45) Bekanntmachung des Hinweises auf die Patenterteilung:
**04.05.94 Patentblatt 94/18**

(84) Benannte Vertragsstaaten:
**DE FR GB IT SE**

(56) Entgegenhaltungen:

**APPLIED PHYSICS LETTERS, Band 49, Nr. 26, 29. Dezember 1986, Seiten 1755-1757, American Institute of Physics; H. DAMMANN et al.: "Phase matching in symmetrical single-mode magneto-optic waveguides by application of stress"**

**APPLIED PHYSICS LETTERS, Band 52, Nr. 9, 29. Februar 1988, Seiten 682-684, American Institute of Physics; E. PROSS et al.: "Yttrium iron garnet single-mode buried channel waveguides for waveguide isolators"**

(73) Patentinhaber: **Philips Patentverwaltung GmbH**
**Wendenstrasse 35c**
**D-20097 Hamburg(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Dammann, Hans, Dr.**
**Eichenstrasse 27**
**D-2081 Tangstedt(DE)**
Erfinder: **Pross, Elke**
**Scheelring 14**
**D-2000 Hamburg 61(DE)**
Erfinder: **Rabe, Gert**
**Nieland 22**
**D-2080 Pinneberg(DE)**
Erfinder: **Tolksdorf, Wolfgang, Prof. Dr.**
**Königsberger Strasse 34**
**D-2082 Tornesch(DE)**

**APPLIED OPTICS**, Band 26, Nr. 18, 15. September 1987, Seiten 3811-3817, Optical Society of America, New York, US; H. HEMME et al.: "Optical isolator based on mode conversion in magnetic garnet films"

**PATENT ABSTRACTS OF JAPAN**, Band 11, Nr. 274 (P-612)[2721], 5. September 1987 ; & JP-A-62 73 227 (FUJITSU LTD) 03-04-1987

(74) Vertreter: **Koch, Ingo, Dr.-Ing. et al Philips Patentverwaltung GmbH, Wendenstrasse 35c D-20097 Hamburg (DE)**

**Beschreibung**

Die Erfindung bezieht sich auf eine optische Vorrichtung zur Verwendung als Isolator, Zirkulator, oder Schalter mit einer als Faraday-Rotator gestalteten Wellenleiterstruktur, welche mit einem entlang der Lichtausbreitungsrichtung orientierten magnetischen Feld beaufschlagt ist, und mit einem vorgeschalteten Eingangspolarisationsfilter und einem Ausgangspolarisationsfilter, deren Polarisationsebenen einen Winkel δ derart miteinander einschließen, daß durch die gesamte Vorrichtung nur in einer Richtung Licht hindurchtreten kann, wobei der Faraday-Rotator in einer TE- und einer TM-Ebene unterschiedliche Fortpflanungskonstanten $\beta_{TE}$ bzw. $\beta_{TM}$ aufweist.

Bei einem aus aufgewachsenen kristallinen Schichten aufgebauten Faraday-Rotator sind herstellungsbedingte Anisotropien unvermeidlich. Beispielsweise entstehen spannungsinduzierte Unterschiede der Brechzahlen. Derartige Anisotropien haben zur Folge, daß ein magnetooptischer Wellenleiter in bekannter Weise zwei ausgezeichnete Lichtführungsebenen aufweist, nämlich die sogenannte TM-Ebene (transversal magnetisch) und die sogenannte TE-Ebene (transversal elektrisch).

Bei einem Schichtwellenleiter verläuft die TE-Ebene in der Schichtebene. Bei einem Streifenwellenleiter, welcher durch kristalline Aufwachsprozesse hergestellt ist, kann die TE-Ebene auch um einige Winkelgrade geneigt zur Substratebene verlaufen. Der genaue Verlauf der TE-Ebene in einem magnetooptischen Kristall läßt sich in bekannter Weise auch meßtechnisch ermitteln. Er kann durch verschiedenartige Anisotropieeffekte beeinflußt werden, welche dann dazu führen, daß die Fortpflanzungskonstanten bzw. Phasengeschwindigkeiten einer TE-Welle und einer TM-Welle nicht gleich sind.

In Appl.Phys.Lett. 1986, Seiten 1755 bis 1757 oder Appl.Phys.Lett. 1988, Seiten 682 bis 684 sind Anordnungen der eingangs genannten Art beschrieben. Dort ist darauf hingewiesen, daß die Differenz $\Delta\beta = \beta_{TM} - \beta_{TE}$ der Fortpflanzungskonstanten für TM-Wellen und TE-Wellen möglichst zu "Null" werden muß. Anderenfalls würde eine linear polarisierte einfallende Welle den Faraday-Rotator als elliptisch polarisierte Welle verlassen. Eine sehr gute optische Isolierung ist jedoch nur dann zu erreichen, wenn am Ausgang des Rotators ebenfalls eine linear polarisierte Welle entsteht, welche senkrecht zur Polarisationsebene des dann sperrenden Polarisationsfilters verläuft.

Die Einstellung eines Wertes $\Delta\beta = 0$ entweder durch besonderen Fertigungsaufwand oder durch nachträgliche Justierung beispielsweise mittels extern aufgebrachter mechanischer Spannung ist aufwendig.

Der Erfindung liegt die Aufgabe zugrunde, den Aufwand für die Anpassung der Fortpflanzungskonstanten der TE-Welle und der TM-Welle zu verringern.

Die Lösung gelingt dadurch, daß die TE-Ebene des Faraday-Rotators derart ausgerichtet ist, daß sie zwischen den Polarisationsebenen der Polarisationsfilter verläuft.

Erfindungsgemäß wurde erkannt, daß die Bedingung $\Delta\beta = 0$ (phase matching) nicht erforderlich ist, wenn die TE-Ebene des Faraday-Rotators geeignet zwischen die Polarisationsebenen der Polarisationsfilter gelegt wird.

Es läßt sich - beispielsweise durch Probieren- ein ausgezeichneter Winkel α zwischen der TE-Ebene des Faraday-Rotators und der Polarisationsebene des vorgeschalteten Polarisationsfilters finden, bei welcher am Ausgang des Faraday-Rotators trotz $\Delta\beta \neq 0$ eine linear polarisierte Welle entsteht.

Einen gewünschten Winkel α kann man bei gegebenen Werten für die der spezifischen Faraday Drehung entsprechende Koppelkonstante K und die Fortpflanzupgskonstanten $\beta_{TM}$ und $\beta_{TE}$ durch geeignete Wahl der magnetooptisch wirksamen Länge L erfindungsgemäß dadurch finden, daß die Polarisationsebene des Eingangspolarisationsfilters zur TE-Ebene um einen Winkel α gedreht ist, welcher angenähert nach folgender Gleichung bestimmt ist:

$$tg2\alpha = \frac{K}{\sqrt{K^2 + (\frac{\Delta\beta}{2})^2}} \cdot tg\left\{L \cdot \sqrt{K^2 + (\frac{\Delta\beta}{2})^2}\right\}$$

mit:

K = Koppelkonstante in Grad $\cdot$ cm$^{-1}$

$\Delta\beta$ = $\beta_{TM}$ - $\beta_{TE}$ in Grad $\cdot$ cm$^{-1}$

L = magneto-optisch wirksame Länge des Faraday-Rotators in cm.
und daß der Winkel $\delta$ zwischen den Polarisationsebenen der Polarisationsfilter derart gewählt ist, daß die Polarisationsebene des vorgeschalteten Polarisationsfilters senkrecht zur Polarisationsebene des den Faraday-Rotator in Sperrichtung verlassenden Lichts gerichtet ist. Dabei ergeben sich zwei gleichwertige Winkel $\alpha$, welche sich um 90° voneinander unterscheiden. Im folgenden wird auf die jeweils möglichen Werte $\alpha$ + 90° nicht besonders hingewiesen.

Sowohl eine sehr gute Isolierwirkung in einer Richtung als auch einen dämpfungsarmen Lichtdurchtritt in der anderen Richtung kann man dadurch erreichen, daß bei gegebenen Werten von K und $\Delta\beta$ die Soll-Länge L des Faraday-Rotators so gewählt ist, daß der Winkel zwischen der Polarisationsebene des vorgeschalteten Polarisationsfilters und der TE-Ebene des Faraday-Rotators einen Wert zwischen 20° und 25°, im Idealfall 22,5° aufweist. Im Idealfall ergibt sich bei $\alpha$ = 22,5° eine nichtreziproke Phasendrehung der Polarisationsebene des Lichts beim Durchgang durch den Faradayrotator um 45°. Die Polarisationsebenen der Polarisationsfilter sind dann um 45° gegeneinander verdreht. In einer Richtung kann beispielsweise polarisiertes Laserlicht mit nur geringfügigen Verlusten durch den Isolator hindurchtreten, in Gegenrichtung kann jedoch ebenso wie bei einem Isolator mit einem bulk-Kristall ($\Delta\beta$ = 0) kein Reflexionslicht in den Laser zurückgeleitet werden (vgl. auch "Physik in unserer Zeit", 1987, Seiten 130 bis 136). Die Verluste sind umso geringer, je kleiner das Verhältnis $|\Delta\beta/K$ ist. Für $|\Delta\beta/K|\leq1/2$ ergeben sich z.B. Verluste von maximal 11%.

Werte $|\Delta\beta/k|\leq1/2$ lassen sich bei der Wellenleiter-Herstellung ohne allzu große Schwierigkeiten erreichen. Da ideale Solldaten - sei es geometrische Abmessungen, Kristalldaten, Herstellungsparameter, Winkelvorgaben - niemals absolut genau zu verwirklichen sind, ist es besonders vorteilhaft, daß mindestens eines der Polarisationsfilter zur optimalen Justierung der Isolation gegenüber dem Faraday-Rotator drehbar ist. Dann kann man die magnetooptisch wirksame Länge L in etwa so bemessen, daß zumindest annähernd ein Sollwinkel $\alpha$ = 22,5° erreicht wird. Bei Toleranzabweichungen wird das in Isolierrichtung vorgeschaltete Polarisationsfilter gegenüber dem Faraday-Rotator (bzw. umgekeht) solange gedreht, bis am Ausgang des Faraday-Rotators eine linear polarisierte Welle gemessen wird. Danach wird die Polarisationsebene des anderen Polarisationsfilters senkrecht zur Polarisationsebene des Ausgangslichts gedreht.

Dabei kann im allgemeinen nicht gleichzeitig eine ideale Isolierung und in umgekehrter Richtung ein Lichtdurchtritt mit kleinster Dämpfung erreicht werden, sondern es ensteht eine vernachlässigbar kleine Zusatzdämpfung von z.B. 2%.

Fertigungstoleranzen wirken sich bei der erfindungsgemäßen Anordnung, insbesondere im Bereich eines optimalen Sollwinkels $\alpha$ = 22,5°, um so geringer aus, je kleiner $\Delta\beta$ ist. Auch ist dann eine justierende Annäherung an die optimale Isolationswirkung erleichtert.

Da mit Streifenwellenleitern besonders geringe Werte für $\Delta\beta$ erreichbar sind, ist deren Verwendung für erfindungsgemäße Isolatoren vorteilhaft. Besonders niedrige Werte für $\Delta\beta$ lassen sich dabei dadurch erzielen, daß der Streifenwellenleiter durch Aufwachsen von Kristallschichten auf einer Substratschicht, Abätzen der neben einer abdeckenden Maske befindlichen Bereiche einer magnetooptischen Kristallschicht und darauffolgendem Aufwachsen einer Mantelschicht hergestellt ist, wobei die Breite der Maske im Bereich von 5 bis 20 $\mu$m gewählt ist.

Die Erfindung wird anhand der Zeichnung näher erläutert.

Fig. 1      zeigt den Prinzipaufbau eines erfindungsgemäßen optischen Isolators.

Fig. 2      zeigt die Herstellungsstadien a,b und c eines für die Erfindung besonders vorteilhaften magnetooptischen Streifenwellenleiters.

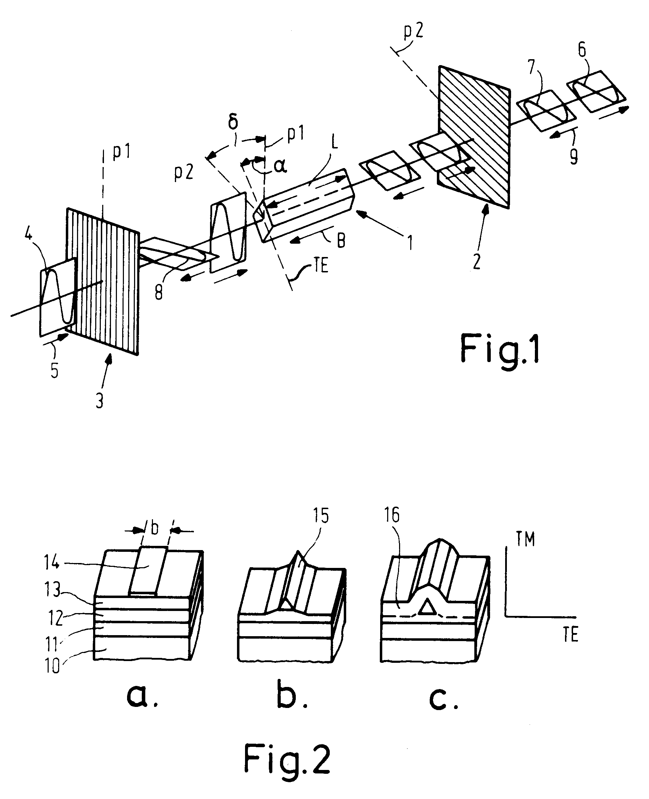

Der in Figur 1 perspektivisch dargestellte optische Isolator besteht aus einem von einem magnetischen Feld B beaufschlagten Faraday-Rotator 1, einem Eingangspolarisationsfilter 2 und einem Ausgangspolarisationsfilter 3. Die magnetooptisch wirksame Länge L des Faraday-Rotators 1 sowie die Winkelzuordnungen der Bauelemente sind derart gewählt, daß eine ankommende polarisierte Lichtwelle 4 in Durchlaßrichtung 5 verlustarm als Ausgangswelle 6 den Isolator mit um 45° gedrehter und der Polarisationsrichtung p2 des Polarisationsfilters 2 angepaßter Polarisationsebene verläßt.

Ein in Isolationsrichtung 9 reflektierter Anteil 7 der Ausgangswelle 6 wird im nichtreziproken Faraday-Rotator 1 nochmals um 45° gedreht zu einer senkrecht zur Polarisationsrichtung p1 des Polarisationsfilters 3 gerichteten Wellenlage 8. Die Welle 8 wird deshalb vom Polarisationsfilter 3 abgeblockt. Bei dieser dargestellten optimalen Konfiguration sind die Richtungen p1 und p2 der Polarisationsebenen der Polarisationsfilter 2 und 3 um $\delta$ = 45° zueinander geneigt.

Dieser Winkel $\alpha$ wird halbiert durch die TE-Richtung TE des Faraday-Rotators 1 ($\alpha$ = 22,5°).

Die magnetooptisch wirksame Länge L des Faraday-Rotators 1 genügt dann folgender Gleichung:

$$tg2\alpha = \frac{K}{\sqrt{K^2 + (\frac{\Delta\beta}{2})^2}} \cdot tg\left\{L \cdot \sqrt{K^2 + (\frac{\Delta\beta}{2})^2}\right\}$$

Wenn die Länge L jedoch herstellungsbedingt von diesem Optimalwert abweicht, kann der Winkel $\alpha$ derart einjustiert werden, daß den Faraday-Rotator in Isolationsrichtung 9 eine linear polarisierte Welle entsprechend Position 8 verläßt, welche dann vom Polarisationsfilter 3 vollständig abgeblockt wird, wenn dieses in eine geeignete Lage justiert ist. Eine in Durchlaßrichtung 5 durch den Faraday-Rotator laufende Eingangswelle 4 wird dann aber geringfügig elliptisch verformt. Dementsprechend wird ein geringer Intensitätsanteil nicht vom Polarisationsfilter 2 hindurchgelassen. Die Verluste in Durchlaßrichtung 5 sind um so geringer, je näher der Winkel $\alpha$ den Wert 22,5° erreicht. Abweichungen vom Optimalwert $\alpha = 22,5°$ wirken sich geringer aus, wenn die Differenz $\Delta\beta$ der Fortpflanzungskonstanten $\beta$TM und $\beta$TE klein ist. Deshalb hat sich ein magnetooptischer Streifenwellenleiter der in Figur 2 dargestellten Art als besonders geeignet erwiesen.

Zunächst wurde gemäß Stadium a folgender Schichtaufbau durch kristallines Aufwachsen hergestellt (mit Schichtdicken gemäß ApplPhys.Lett. 1988, Seiten 682-684): Substratschicht 10, Absorptionsschicht 11, Mantelschicht 12 und magnetooptische Schicht 13. Mit einer Maske 14 wurde die magnetooptische Schicht 13 abgedeckt und durch einen Ätzvorgang ein Gebilde nach Figur 2 b hergestellt, bei welchem von der magnetooptischen Schicht 13 der Streifen 15 verblieben ist. Darüber wurde eine weitere Mantelschicht 16 aufgewachsen, so daß sich der magnetooptische Streifenwellenleiter nach Fig. 2 c ergab. Bei symmetrischem Aufwachsen der Kristallschichten liegt die TE-Ebene im allgemeinen parallel zu der Schichtebene, die TM-Ebene senkrecht dazu.

Der magnetooptische Streifenwellenleiter nach Fig. 2 c ist hervorragend als Faraday-Rotator 1 gemäß Fig. 1 geeignet. Die Wahl der Maskenbreite b im Bereich von 5 bis 20 $\mu$m ergibt besonders niedrige Werte von $\Delta\beta$.

Die Erfindung wurde am Beispiel eines optischen Isolators beschrieben. Selbstverständlich können mit einem solchen Element auch in dem Fachmann geläufiger Weise optische Zirkulatoren, optische Schalter oder ähnliche Elemente aufgebaut werden. Dazu kann im Bedarfsfall das Magnetfeld ausgeschaltet oder seine Richtung umgekehrt werden.

**Patentansprüche**

1. Optische Vorrichtung zur Verwendung als Isolator, Zirkulator, oder Schalter mit einer als Faraday-Rotator (1) gestalteten Wellenleiterstruktur, welche mit einem entlang der Lichtausbreitungsrichtung orientierten magnetischen Feld (B) beaufschlagt ist, und mit einem vorgeschalteten Eingangspolarisationsfilter (3) und einem Ausgangspolarisationsfilter (2), deren Polarisationsebenen einen Winkel $\delta$ derart miteinander einschließen, daß durch die gesamte Vorrichtung nur in einer Richtung Licht hindurchtreten kann, wobei der Faraday-Rotator (1) in einer TE- und einer TM-Ebene unterschiedliche Fortpflanzungskonstanten $\beta_{TE}$ bzw. $\beta_{TM}$ aufweist,
   dadurch gekennzeichnet, daß die TE-Ebene des Faraday-Rotators derart ausgerichtet ist, daß sie zwischen den Polarisationsebenen (p1 und p2) der Polarisationsfilter (2 und 3) verläuft.

2. Optische Vorrichtung nach Anspruch 1,
   dadurch gekennzeichnet, daß die Polarisationsebene des Eingangspolarisationsfilters (3) zur TE-Ebene um einen Winkel $\alpha$ gedreht ist, welcher angenähert nach folgender Gleichung bestimmt ist:

$$tg2\alpha = \frac{K}{\sqrt{K^2 + (\frac{\Delta\beta}{2})^2}} \cdot tg\left\{L \cdot \sqrt{K^2 + (\frac{\Delta\beta}{2})^2}\right\}$$

mit:

K = Koppelkonstante in Grad $\cdot$ cm$^{-1}$

$\Delta\beta$ = $\beta_{TM}$ - $\beta_{TE}$ in Grad $\cdot$ cm$^{-1}$

L = magneto-optisch wirksame Länge des Faraday-Rotators in cm,

und daß der Winkel $\delta$ zwischen den Polarisationsebenen der Polarisationsfilter (2,3) derart gewählt ist, daß die Polarisationsebene (p1) des vorgeschalteten Polarisationsfilters (3) senkrecht zur Polarisationsebene des den Faraday-Rotator (1) in Sperrichtung (9) verlassenden Lichts (8) gerichtet ist.

3. Optische Vorrichtung nach Anspruch 2,
dadurch gekennzeichnet, daß bei gegebenen Werten von K und $\Delta\beta$ die Soll-Länge L des Faraday-Rotators (1) so gewählt ist, daß der Winkel $\alpha$ zwischen der Polarisationsebene (p1) des Eingangspolarisationsfilters (3) und der TE-Ebene des Faraday-Rotators (1) einen Wert zwischen 20° und 25°, im Idealfall 22,5° aufweist.

4. Optische Vorrichtung nach einem der Ansprüche 1 bis 3,
dadurch gekennzeichnet, daß mindestens eines der Polarisationsfilter (2,3) zur optimalen Justierung der Isolation gegenüber dem Faraday-Rotator (1) verdrehbar ist.

5. Optische Vorrichtung nach einem der Ansprüche 1 bis 4,
dadurch gekennzeichnet, daß der Faraday-Rotator (1) ein Streifenwellenleiter ist.

6. Optische Vorrichtung nach Anspruch 5,
dadurch gekennzeichnet, daß der Streifenwellenleiter durch Aufwachsen von Kristallschichten (11,12,13) auf einer Substratschicht (10) , Abätzen der neben einer abdeckenden Maske (14) befindlichen Bereiche einer magnetooptischen Kristallschicht (13) und darauffolgendes Aufwachsen einer Mantelschicht (16) hergestellt ist, wobei die Breite der Maske (14) im Bereich von 5 bis 20 $\mu$m gewählt ist.

**Claims**

1. An optical device for use as an isolator, circulator or switch, with a waveguide structure formed as a Faraday rotator (1) to which a magnetic field (B) is applied which is oriented along the direction of propagation of light, and with a preceding input polarization filter (3) and a output polarization filter (2) whose planes of polarization enclose an angle $\delta$ with respect to each other such that light can traverse the overall device in one direction only, the Faraday rotator (1) having different propagation constants $\beta_{TE}$ and $\beta_{TM}$ in a TE plane and a TM plane, respectively, characterized in that the TE plane of the Faraday rotator is aligned in such a way that it extends between the planes of polarization (p1 and p2) of the polarization filters (2 and 3).

2. An optical device as claimed in Claim 1, characterized in that the plane of polarization of the input polarization filter (3) is rotated with respect to the TE plane by an angle $\alpha$ which is determined approximately according to the following equation:

$$tg2\alpha \; = \; \cfrac{K}{\sqrt{K^2 + (\frac{\Delta\beta}{2})^2}} \; . \; tg \left\{ L \; . \; \sqrt{K^2 + (\frac{\Delta\beta}{2})^2} \right\}$$

with:

K = coupling constant in degrees $.cm^{-1}$

$\Delta\beta$ = $\beta_{TM}$ - $\beta_{TE}$ in degrees $.cm^{-1}$

L = magneto-optically effective length of the Faraday rotator in cm,

and that the angle $\delta$ between the planes of polarization of the polarization filters (2,3) is chosen to be such that the plane of polarization (p1) of the preceding polarization filter (3) is perpendicular to the plane of polarization of the light (8) leaving the Faraday rotator (1) in the blocking direction (9).

3. An optical device as claimed in Claim 2, characterized in that at given values of K and $\Delta\beta$ the nominal length L of the Faraday rotator (1) is chosen to be such that the angle $\alpha$ between the plane of polarization (p1) of the input polarization filter (3) and the TE plane of the Faraday rotator (1) has a value of between 20° and 25°, in the ideal case 22.5°.

4. An optical device as claimed in any one of Claims 1 to 3, characterized in that at least one of the polarization filters (2,3) is rotatable with respect to the Faraday rotator (1) for optimum adjustment of the isolation.

5. An optical device as claimed in any one of Claims 1 to 4, characterized in that the Faraday rotator (1) is a strip waveguide.

6. An optical device as claimed in Claim 5, characterized in that the strip waveguide is manufactured by depositing crystal layers (11,12,13) on a substrate layer (10), etching away the regions of a magneto-optical crystal layer (13) which are present beside a covering mask (14) and subsequently depositing a cladding layer (16), the width of the mask (14) being chosen in the range between 5 and 20 $\mu$m.

**Revendications**

1. Dispositif optique s'utilisant comme isolateur, circulateur ou commutateur présentant une structure de guide d'ondes conçue comme rotateur de Faraday (1), qui comporte un champ magnétique (B) orienté suivant la direction de propagation de la lumière, un filtre de polarisation d'entrée (3) disposé en amont ainsi qu'un filtre de polarisation de sortie (2), dont les plans de polarisation font mutuellement un tel angle $\delta$ que dans tout le dispositif la lumière ne peut passer que dans une seule direction, le rotateur de Faraday (1) présentant des constantes de propagation différentes $\beta_{TE}$ respectivement $\beta_{TM}$ dans le plan TE et le plan TM, caractérisé en ce que le plan TE du rotateur de Faraday est aligné de manière à s'étendre entre les plans de polarisation (p1, p2) des filtres de polarisation (2 et 3).

2. Dispositif optique selon la revendication 1, caractérisé en ce que le plan de polarisation du filtre d'entrée de polarisation (3) est tourné par rapport au plan TE d'un angle $\delta$ approximativement déterminé par l'équation suivante:

$$tg2\alpha \; = \; \cfrac{K}{\sqrt{K^2 + (\frac{\Delta\beta}{2})^2}} \; . \; tg \left\{ L \; . \; \sqrt{K^2 + (\frac{\Delta\beta}{2})^2} \right\}$$

où

$K$ = constante de couplage en degrés . cm$^{-1}$

$\Delta \beta$ = $\beta_{TM}$ - $\beta_{TE}$ en degrés . cm$^{-1}$

$L$ = longueur magnéto-optiquement effective du rotateur de Faraday en cm.

et en ce que l'angle $\delta$ formé entre les plans de polarisation des filtres de polarisation (2, 3) est choisi de manière que le plan de polarisation (p1) du filtre de polarisation (3) disposé en amont s'étend perpendiculairement au plan de polarisation de la lumière quittant le rotateur de Faraday (1) dans la direction bloquée (9).

3. Dispositif optique selon la revendication 2, caractérisé en ce que dans le cas de valeurs définies de K et de $\Delta \beta$ la longueur nominale L du rotateur de Faraday (1) est choisie de manière que l'angle $\alpha$ formé entre le plan de polarisation (p1) du filtre de polarisation (3) disposé en amont et le plan TE du rotateur de Faraday (1) présente une valeur comprise entre 20 et 25° qui dans le cas idéal est égale à 22,5°.

4. Dispositif optique selon l'une des revendications 1 à 3, caractérisé en ce qu'au moins l'un des filtres de polarisation (2,3) peut être tourné par rapport au rotateur de Faraday (1) pour obtenir un ajustage optimal de l'isolation.

5. Dispositif optique selon l'une des revendications 1 à 4, caractérisé en ce que le rotateur de Faraday (1) est un guide d'ondes constitué de bandes.

6. Dispositif optique selon la revendication 5, caractérisé en ce que le guide d'ondes constitué de bandes est fabriqué par croissance de couches de cristal (11, 12, 13) sur une couche de substrat (10), par gravure des zones d'une couche de cristal magnéto-optique (13) s'étendant à côté d'un masque de couverture (14) et par croissance subséquente d'une couche de revêtement (16), la largeur du masque (14) étant choisie de manière à être comprise entre 5 et 20 $\mu$m.

Fig.1

Fig.2